# EUROPÄISCHE PATENTANMELDUNG

(11) **EP 2 404 776 A2**
(43) Veröffentlichungstag der Anmeldung: **11.01.2012**
(21) Anmeldenummer: 11450075.4
(22) Anmeldetag: 16.06.2011
(51) Int. Cl.: B60K 15/077

(54) **Verfahren zur Herstellung eines Behälters für Betriebsmittel von Fahrzeugen und Behälter hiefür**

(30) Priorität: 06.07.2010 AT 11422010
(71) Anmelder: Alutech Gesellschaft m.b.H., 5651 Lend (AT)
(72) Erfinder: Höller, Josef, 5622 Goldegg (AT); Sendlhofer, Gernot, 5602 Wagrain (AT)
(74) Vertreter: Weiser, Andreas

(57) **Zusammenfassung**

Die Erfindung betrifft ein Verfahren zum Herstellen eines Behälters (1) für Betriebsmittel von Fahrzeugen, der einen zylinderförmigen Mantel (2) und mindestens eine Schwall- oder Trennwand (5, 5', 5", 5"', 7) in seinem Inneren aufweist, welche einen in Axialrichtung umgebogenen Randabschnitt (15) hat, umfassend die Kombination der folgenden Schritte in beliebiger Reihenfolge:

Aufbringen eines Abdichtungsmaterials (16, 23, 26) in umlaufender Weise auf die Innenseite des Mantels (2) oder auf den Außenumfang der Schwall- oder Trennwand (5, 5', 5", 5"', 7); und

Einführen der Schwall- oder Trennwand (5, 5', 5", 5"', 7) in den Mantel (2) in Axialrichtung desselben.

Die Erfindung betrifft ferner einen nach diesem Verfahren hergestellten Behälter (1).

## Beschreibung

Die vorliegende Erfindung betrifft ein Verfahren zum Herstellen eines Behälters für Betriebsmittel von Fahrzeugen, der einen zylinderförmigen Mantel und mindestens eine Schwall- oder Trennwand in seinem Inneren aufweist, welche einen in Axialrichtung umgebogenen Randabschnitt hat, sowie einen derartigen Behälter.

Für den Transport von fluiden Betriebsmitteln werden üblicherweise Behälter mit einer oder mehreren in seinem Inneren eingebauten Schwall- oder Trennwänden auf dem Fahrgestell eines Lastkraftwagens angebracht. Trennwände werden benötigt, um Behälter in mehrere Kammern für unterschiedliche Betriebsmittel wie Kraftstoffe, Katalysatorfluide usw. zu unterteilen, was entsprechende Dichtheit der Trennwand erfordert. Schwallwände dienen üblicherweise dazu, die während der Fahrt beim Beschleunigen oder Bremsen auftretende Bewegung des Behälterinhaltes nach Art eines Wellenbrechers zu verzögern. Neuerdings werden Schwallwände aber auch dazu eingesetzt, zur temporären Aufnahme einer kleinen Kraftstoffmenge eine gesondert befüllbare Kraftstoffkammer abzutrennen, die nur bis zur Unterkante der untersten Schwallwandöffnung(en) befüllt wird, um Kraftstoff bei der Erstauslieferung des Fahrzeugs zu sparen. Für diese "first-fill"-Funktion ist daher auch bei Schwallwänden Dichtheit an ihrem Umfangsrand wünschenswert.

Schwall- oder Trennwände haben in der Regel einen in Axialrichtung umgebogenen Randabschnitt, der mit der Innenwand des Behälters an mehreren Stellen mittels Schweißens oder Clinchens verbunden wird. Schweißen ist aufwendig und bringt den Nachteil mit sich, daß die mit der Innenwand des Behälters verschweißten Stellen des Randabschnittes verspröden bzw. aufgehärtet werden, was im Fall von starken radialen Beanspruchungen zu Materialermüdung und einem Bruch bzw. Zerreißen der Schwall- oder Trennwände an den geschweißten Stellen führen kann. Clinchen kann keine ausreichende Abdichtung zwischen dem Randabschnitt der Schwall- oder Trennwand und der Innenseite des Behälters gewährleisten.

Die Erfindung setzt sich zum Ziel, die geschilderten Nachteile des Standes der Technik zu überwinden und ein einfacheres und materialschonendes Verfahren zur Herstellung eines Behälters mit einer dicht eingesetzten Schwall- oder Trennwand sowie einen auf diese Weise hergestellten Behälter zu schaffen.

Dieses Ziel wird in einem ersten Aspekt der Erfindung mit einem Verfahren der eingangs genannten Art erreicht, das sich gemäß der Erfindung durch die Kombination der folgenden Schritte in beliebiger Reihenfolge auszeichnet:
Aufbringen eines Abdichtungsmaterials in umlaufender Weise auf die Innenseite des Mantels oder auf den Außenumfang der Schwall- oder Trennwand, und
Einführen der Schwall- oder Trennwand in den Mantel in Axialrichtung desselben.

Auf diese Weise wird ein einfaches und leicht automatisierbares Verfahren zum Erzeugen einer dichten Verbindung zwischen einer Schwall- bzw. Trennwand und der Innenwand eines Behälters geschaffen, welches ohne Schweißen das Auslangen findet.

Gemäß einer ersten bevorzugten Ausführungsform der Erfindung wird vorgesehen, daß als Abdichtungsmaterial eine Kleberaupe verwendet wird, die in Umfangsrichtung auf die Innenseite des Mantels aufgetragen wird, wonach das Einführen der Schwall-oder Trennwand unter Vorschieben der Kleberaupe keilförmig vor der Schwall- oder Trennwand erfolgt, und anschließend die Kleberaupe trocknen gelassen wird. Dies stellt eine besonders kostengünstige Ausführungsform dar. Die Verwendung einer solchen Kleberaupe hat überdies den Vorteil, daß diese eine hohe Elastizität hat, was zu einer ausdehnungsfähigen Verbindung zwischen der Schwall- bzw. Trennwand und dem Mantelinneren führt. Ein auf diese Weise hergestellter Behälter ist somit widerstandsfähig gegenüber einem Bruch der Schwall- bzw. Trennwand durch zugkraftbedingte Beanspruchungen, die an diesen Verbindungsstellen während des Betriebs des Fahrzeugs auftreten.

Besonders vorteilhaft ist es, wenn der Randabschnitt vor dem Einführen in radialer Richtung eingesickt wird, wobei das Einsicken eine umlaufende Hinterschneidung zwischen dem Randabschnitt und dem Mantel beläßt, die in Einführrichtung ausmündet. Durch das Einsicken wird eine höhere Flächenpressung auf die Kleberaupe ausgeübt, was eine stärkere Abdichtung gewährt. Ein weiterer Vorteil dieser Ausführungsform ist, daß zwischen der Sicke und dem Mantel ein insgesamt größeres Volumen für die Einbringung eines Abdichtungsmaterials entsteht. Dadurch weitet sich die eingepresste Kleberaupe in axialer Richtung über einen größeren Bereich zwischen Mantel und Randabschnitt aus, wodurch ein breiterer Abdichtungsstreifen geschaffen wird.

Gemäß einer zweiten alternativ bevorzugten Ausführungsform der Erfindung wird vorgesehen, daß der Randabschnitt vor dem Einführen in radialer Richtung eingesickt und die so entstandene Sicke mit zumindest einer Öffnung versehen wird, und daß nach dem Einführen der Schwall- oder Trennwand das Aufbringen des Abdichtungsmaterials durch die Öffnung in den von der Sicke gebildeten Hohlraum zwischen Mantel und Randabschnitt erfolgt. Auf diese Weise wird der Schritt des Aufbringens vereinfacht, weil die Sicke eine Führung für die Ausbreitung des Abdichtungsmaterials bildet. Überdies ermöglicht die Sicke wieder eine verbesserte Flächenpressungsverteilung im Abdichtungsmaterial, was zu einer ausgezeichneten Abdichtung führt.

Bei dieser Ausführungsform ist es besonders günstig, wenn die Sicke mit zumindest einer Entlüftungsöffnung für das Entweichen der Luft beim Aufbringen des Abdichtungsmaterials versehen wird. Dadurch wird das Einbringen erleichtert und ein schnelleres Austrocknen des Abdichtungsmaterials gewährleistet.

Gemäß einer dritten alternativ bevorzugten Ausführungsform der Erfindung wird der Randabschnitt vor dem Einführen in radialer Richtung eingesickt und als Abdichtungsmaterial ein Dichtungsring verwendet, der in die Sicke vor dem Einführen der Schwall- oder Trennwand eingefügt wird. Ein Vorteil dieser Ausführungsform ist, daß der Dichtungsring als Halbzeug vorgefertigt werden kann.

In einer bevorzugten Ausführungsform kann vorgesehen werden, daß der Randabschnitt mit dem Mantel zusätzlich durch Schweißen oder Clinchen verbunden wird, wodurch eine noch bessere Abdichtung zwischen Randabschnitt und Mantel erreicht werden kann.

In einem zweiten Aspekt erreicht die Erfindung ihre Ziele mit einem Behälter, der einen zylinderförmigen Mantel und mindestens eine Schwall- oder Trennwand in seinem Inneren aufweist, welche einen in Axialrichtung umgebogenen Randabschnitt hat, und der sich dadurch auszeichnet, daß zwischen dem Randabschnitt und der Innenseite des Mantels ein Abdichtungsmaterial aufgebracht ist.

Gemäß einer ersten bevorzugten Ausführungsform des erfindungsgemäßen Behälters ist das Abdichtungsmaterial eine Kleberaupe, welche in den auf der Innenseite des Mantels umlaufenden Mündungsspalt keilförmig eingepreßt ist, der sich zwischen dem Biegebereich des Randabschnittes und der Innenseite des Mantels einstellt.

In einer besonders bevorzugten Variante der genannten ersten Ausführungsform des erfindungsgemäßen Behälters ist der Randabschnitt mit einer radial einwärts gerichteten Sicke versehen, die eine an der Innenseite des Mantels umlaufende und in axialer Richtung ausmündende Hinterschneidung zwischen dem Randabschnitt und dem Mantel beläßt, in die als Abdichtungsmaterial eine Kleberaupe formschlüssig eingepreßt ist.

Gemäß einer zweiten alternativen Ausführungsform des Behälters der Erfindung wird vorgesehen, daß der Randabschnitt mit einer radial einwärts gerichteten Sicke versehen ist, welche zumindest eine Öffnung aufweist, über die das Abdichtungsmaterial in den zwischen der Sicke und der Innenseite des Mantels ausgebildeten Hohlraum diesen ausfüllend eingebracht ist.

In einer dritten alternativen bevorzugten Ausführungsform des erfindungsgemäßen Behälters ist der Randabschnitt mit einer radial einwärts gerichteten Sicke versehen, in welche ein Abdichtungsmaterial in Form eines Dichtungsringes eingefügt ist.

Hinsichtlich der Vorteile und weiterer Merkmale der erfindungsgemäßen Behälter wird auf die obigen Ausführungen zu den verschiedenen Verfahrensvarianten und auf die nachstehende Beschreibung bevorzugter Ausführungsformen verwiesen, welche auf die begleitenden Zeichnungen Bezug nehmen, in denen zeigen:
Fig. 1 den Behälter der Erfindung in einer Perspektivansicht;
die Fig. 2a - 2c eine erste Ausführungsform des erfindungsgemäßen Verfahrens anhand von Axialschnitten des Behälters während dreier aufeinanderfolgenden Stufen des Verfahrens;
Fig. 3a einen vergrößerten Detailschnitt von Fig. 2c;
Fig. 3b eine alternative Variante des Bereichs zwischen dem Randabschnitt und dem Mantel des Behälters in vergrößertem Detailschnitt analog zu Fig. 3a;
die Fig. 4a - 4c eine zweite Ausführungsform des erfindungsgemäßen Verfahrens anhand von Axialschnitten des Behälters während dreier aufeinanderfolgenden Stufen des Verfahrens;
die Fig. 5a und 5b eine dritte Ausführungsform des erfindungsgemäßen Verfahrens anhand von Axialschnitten des Behälters während aufeinanderfolgenden Stufen des Verfahrens; und
Fig. 5c das Detail A von Fig. 5b vergrößert.

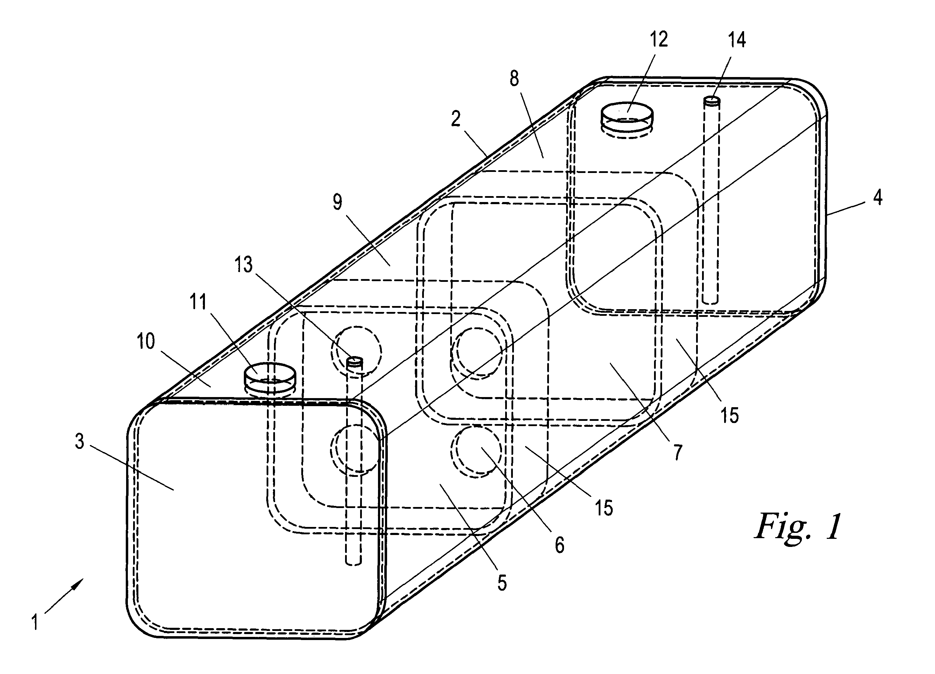

In Fig. 1 ist ein Behälter 1 für den Transport von fluiden Betriebsmitteln von Fahrzeugen gezeigt. Die Betriebsmittel können sich in einem flüssigen oder granulären Zustand befinden. Flüssige Betriebsmittel können z.B. Benzin, Diesel od.dgl. sein, granuläre Betriebsmittel z.B. Pellets oder Ammoniaksalz. Der Behälter 1 wird beispielsweise in der Art eines herkömmlichen Kraftstoffbehälters am Fahrgestell eines Lastkraftwagens (LKWs) montiert.

Der Behälter 1 weist einen allgemein-zylindrischen Mantel 2 auf, der an seinen beiden Enden durch eine vordere Stirnwand 3 und eine hintere Stirnwand 4 dicht abgeschlossen ist. Unter "allgemein-zylindrisch" wird ein Zylinder mit einer beliebigen Grund- bzw. Querschnittsfläche verstanden, sei sie kreisrund, oval, rechteckig, quadratisch oder - wie dargestellt - quadratisch mit abgerundeten Ecken oder sonstwie geformt. Die Stirnwände 3, 4 sind mit dem Mantel 2 verschweißt, vercrimpt oder sonstwie verbunden.

Der Behälter 1 umfaßt eine Schwallwand 5 mit Durchbrechungen 6 sowie eine Trennwand 7, welche den Behälter 1 in drei Kammern 8, 9, 10 unterteilen. Es versteht sich, daß der Behälter 1 auch nur mit einer oder mehreren Schwallwänden 5 oder einer oder mehreren Trennwänden 7 ausgestattet sein kann.

Der Behälter 1 verfügt über zwei Einfüllstutzen 11, 12 und zwei Entnahmeeinheiten 13, 14 herkömmlicher Art, über welche die Betriebsmittel in Bodennähe des Behälters 1 entnommen werden können, wie dem Fachmann bekannt.

Die Schwall- bzw. Trennwände 5, 7 haben jeweils einen in Axialrichtung umgebogenen Randabschnitt 15, welcher an seiner dem Mantel 2 zugewandten Seite umlaufend mit diesem verbunden ist. Die Verbindung der Trennwand 7 mit dem Mantel 2 muss eine ausgezeichnete Dichtheit aufweisen, weil die Flüssigkeit, welche in der durch die Trennwand 7 und die hintere Stirnwand 4 abgegrenzten Kammer 8 gespeichert ist, nicht mit dem restlichen Volumen des Behälters 1 in Berührung kommen darf. Doch auch die Schwallwand 5 sollte an ihrer Verbindungsstelle mit dem Mantel 2 - zumindest bis zur Unterkante der untersten Durchbrechung 6 - möglichst dicht sein, damit die zwischen der vorderen Stirnwand 3 und der Schwallwand 5 abgegrenzte Kammer 10, in welcher die Entnahmeeinheit 13 liegt, für die Erstauslieferung des Fahrzeugs mit einer kleinen Kraftstoffmenge befüllt werden kann ("first-fill"-Funktion).

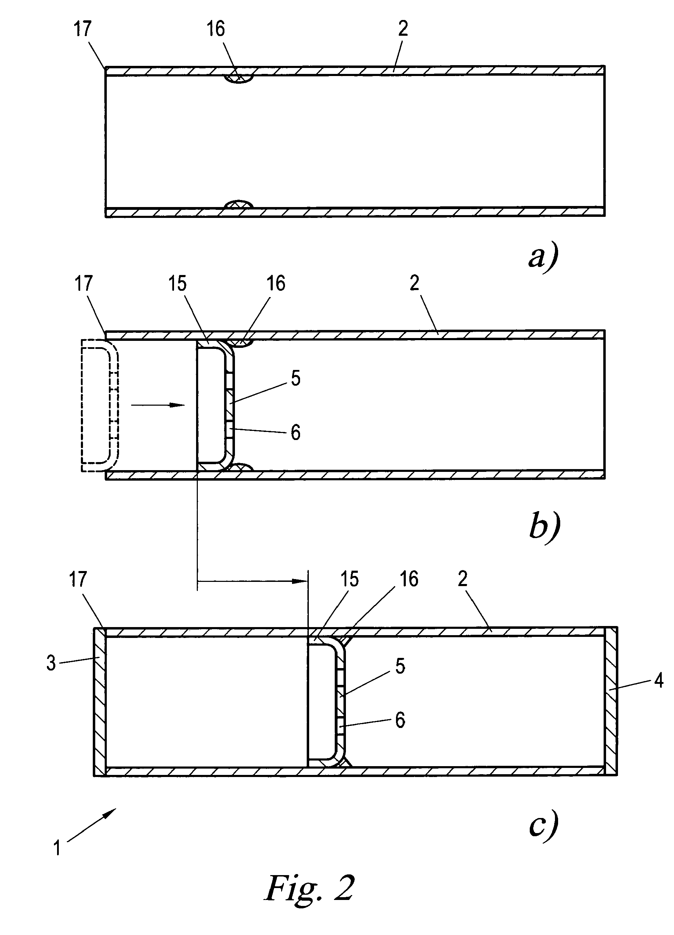

Die Fig. 2a - c zeigen die Schritte einer ersten Ausführungsform eines Verfahrens zur Herstellung eines Behälters 1 gemäß Fig. 1 mit einer beispielhaften Schwallwand 5. Gemäß Fig. 2a wird in einem ersten Schritt eine Kleberaupe 16 auf die Innenseite des Mantels 2 in Umfangsrichtung aufgetragen, beispielsweise mittels einer in radialer Richtung orientierten Spritzdüse (nicht gezeigt). Dieser Schritt kann manuell oder automatisch, z.B. durch den Einsatz eines Spritz-Roboters, durchgeführt werden.

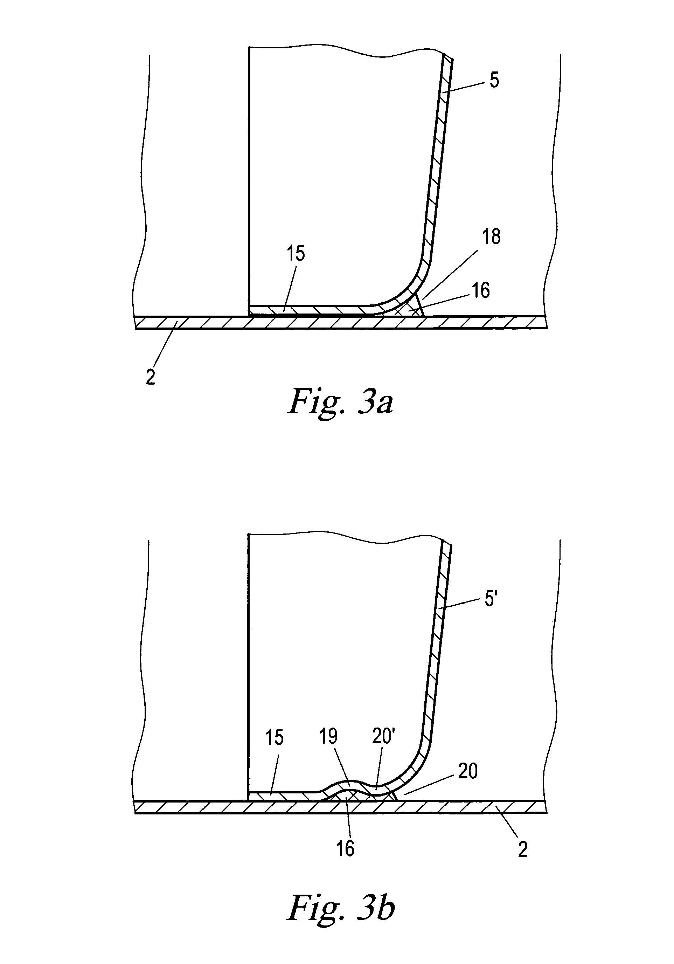

In einem zweiten Schritt wird, wie in Fig. 2b dargestellt, die Schwallwand 5 mit dem Mantel 2 abgekehrtem Randabschnitt 15 in einen Endabschnitt 17 des Mantels 2 eingesetzt und anschlie-βend in Axialrichtung desselben soweit eingeführt, bis sie auf die Kleberraupe 16 trifft, diese verformt und keilförmig vor sich her schiebt, bis die gewünschte Endposition (Fig. 2c) erreicht ist. In dieser Endposition wird die Kleberaupe 16 trocknen gelassen oder aktiv ausgehärtet, z.B. durch Einwärmung oder Bestrahlung. Fig. 2c zeigt den fertigen Behälter 1 mit der Schwallwand 5 in ihrer Endposition und den Stirnwänden 3, 4. Fig. 3a zeigt den umlaufenden Mündungsspalt 18, der sich zwischen dem Biegebereich des Randabschnittes 15 und der Innenseite des Mantels 2 beim Einführen der Schwallwand 5 einstellt, im Detail. Wie ersichtlich wird durch das Vorschieben der Schwallwand 5 im Schritt von Fig. 2b die Kleberaupe 16 aufgrund der Einwirkung der radialen Druckkräfte im Mündungsspalt 18 zusammengepresst und dichtet auf diese Weise den Bereich zwischen Randabschnitt 15 und Mantel 2 ab.

Fig. 3b zeigt eine Variante des Verfahrens und des Behälters 1 der Fig. 2a - c und 3a mit einer abgewandelten Schwallwand 5'. Bei dem Verfahren von Fig. 3b wird der Randabschnitt 15 der Schwallwand 5' mit einer radial einwärts gerichteten Sicke 19 versehen, die eine an der Innenseite des Mantels 2 umlaufende und in axialer Richtung ausmündende Hinterschneidung 20 zwischen Randabschnitt 15 und Mantel 2 beläßt, d.h. eine zurückgesetzte Schulter 20' hat. Beim Einführschritt von Fig. 2b wird damit die Sicke 19 über die Kleberaupe 16 in axialer Richtung gezogen, wodurch diese vom Randabschnitt 15 formschlüssig umfaßt und eingepresst wird. Die Linienpressung auf der Kleberaupe 16 ist dabei unter der Schulter 20' am stärksten.

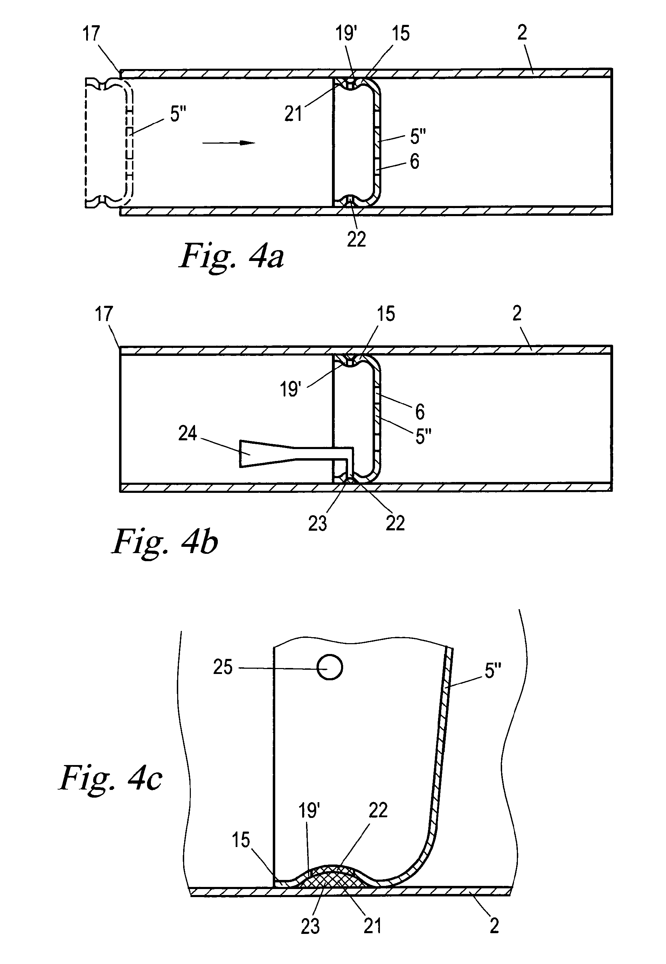

Die Fig. 4a und 4b zeigen eine zweite Ausführungsform eines Verfahrens zur Herstellung eines Behälters 1. Gemäß Fig. 4a wird hier eine Schwallwand 5" verwendet, welche an ihrem Randabschnitt 15 mit einer radial einwärts gerichteten Sicke 19' versehen ist, die im Gegensatz zu Fig. 3b keine Hinterschneidung beläßt, sondern zusammen mit dem Mantel 2 einen ringförmigen Hohlraum 21 bildet. Die Sicke 19' bzw. der Hohlraum 21 ist mit zumindest einer radialen Öffnung 22 versehen.

In Fig. 4a wird zunächst die Schwallwand 5" wieder in den Endabschnitt 17 des Mantels 2 eingesetzt und in Axialrichtung bis zur gewünschten Position eingeführt. Anschließend wird in Fig. 4b ein Abdichtungsmaterial 23 mittels einer Spritzdüse 24 durch die Öffnung 22 in den Hohlraum 21 eingespritzt, bis es diesen vollständig ausfüllt. Wie in Fig. 4c gezeigt, kann dabei die Sicke 19' mit einer oder mehreren Entlüftungsöffnungen 25 ausgestattet werden, über die die Luft während des Einspritzens entweichen und das Abdichtungsmaterial 23 austrocknen kann. Das getrocknete Abdichtungsmaterial 23 wird durch die Sicke 19' wieder formschlüssig gegen den Mantel 2 gepresst und bildet mit diesem eine zuverlässige Abdichtung.

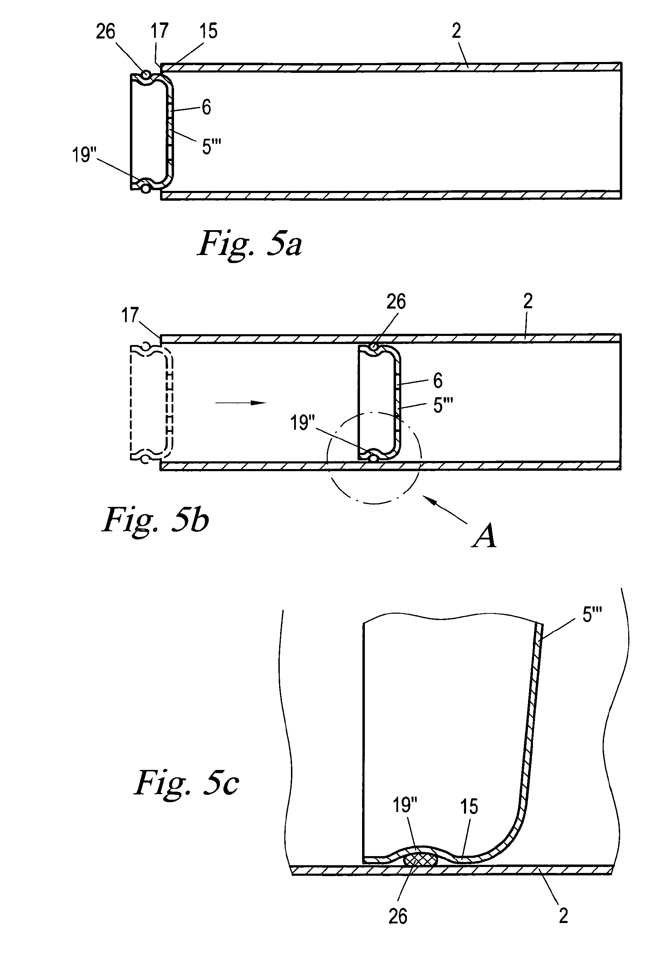

Die Fig. 5a und 5b zeigen die Schritte einer dritten Ausführungsform eines Verfahrens zur Herstellung eines Behälters 1 mit einer wiederum abgewandelten Schwallwand 5"'. Gemäß Fig. 5a wird der Randabschnitt 15 der Schwallwand 5"' wieder mit einer radial nach innen gerichteten Sicke 19" versehen, in welche anschließend ein Dichtungsring 26 eingefügt wird. Die Eigenschaften des Dichtungsringes 26, wie Durchmesser und Elastizität, werden an die Größenverhältnissen zwischen dem Mantel 2 und der Schwallwand 5"' angepasst, um eine optimale Abdichtung zu erreichen.

Die Schwallwand 5"' mit der Sicke 19" und dem darin eingesetzten Dichtungsring 26 kann z.B. als Halbzeug vorgefertigt werden und wird gemäß Fig. 5a wieder mit abgekehrtem Randabschnitt 12 in den Endabschnitt 17 des Mantels 2 eingesetzt. Gemäß Fig. 5b wird die Schwallwand 5"' mitsamt dem Dichtungsring 26 anschließend in Axialrichtung bis zur gewünschten Position eingeführt. Fig. 5c ist ein vergrößerter Detailschnitt des Bereichs zwischen Mantel 2 und Biegebereich des Randabschnittes 15 der Schwallwand 5"' nach dem Schritt des Einführens. Wie ersichtlich wird der Dichtungsring 26 durch die dem Mantel 2 zugewandte Oberfläche der Sicke 19" in radialer Richtung eingepresst, um auf diese Weise die Abdichtung herzustellen.

Es versteht sich, daß alle in den Fig. 2 - 5 gezeigten Ausführungsformen des Verfahrens auf die gleiche Art und Weise auch an einer Trennwand 7 statt an einer Schwallwand 5 ausgeführt werden können. Die Erfindung ist demgemäß nicht auf die dargestellten Ausführungsbeispiele beschränkt, sondern umfaßt alle Varianten und Modifikationen, die in den Rahmen der angeschlossenen Ansprüche fallen.

## Patentansprüche

1. Verfahren zum Herstellen eines Behälters (1) für Betriebsmittel von Fahrzeugen, der einen zylinderförmigen Mantel (2) und mindestens eine Schwall- oder Trennwand (5, 5', 5", 5"', 7) in seinem Inneren aufweist, welche einen in Axialrichtung umgebogenen Randabschnitt (15) hat, **gekennzeichnet durch** die Kombination der folgenden Schritte in beliebiger Reihenfolge:
Aufbringen eines Abdichtungsmaterials (16, 23, 26) in umlaufender Weise auf die Innenseite des Mantels (2) oder auf den Außenumfang der Schwall- oder Trennwand (5, 5', 5", 5"', 7); und
Einführen der Schwall- oder Trennwand (5, 5', 5", 5"', 7) in den Mantel (2) in Axialrichtung desselben.

2. Verfahren nach Anspruch 1, **dadurch gekennzeichnet, daß** als Abdichtungsmaterial eine Kleberaupe (16) verwendet wird, die in Umfangsrichtung auf die Innenseite des Mantels (2) aufgetragen wird, wonach das Einführen der Schwall- oder Trennwand (5, 5', 7) unter Vorschieben der Kleberaupe (16) keilförmig vor der Schwall- oder Trennwand (5, 5', 7) erfolgt, und anschließend die Kleberaupe (16) trocknen gelassen wird.

3. Verfahren nach Anspruch 2, **dadurch gekennzeichnet, daß** der Randabschnitt (15) vor dem Einführen in radialer Richtung eingesickt wird, wobei das Einsicken eine umlaufende Hinterschneidung (20) zwischen dem Randabschnitt (15) und dem Mantel (2) beläßt, die in Einführrichtung ausmündet.

4. Verfahren nach Anspruch 1, **dadurch gekennzeichnet, daß** der Randabschnitt (15) vor dem Einführen in radialer Richtung eingesickt und die so entstandene Sicke (19') mit zumindest einer Öffnung (22) versehen wird, und daß nach dem Einführen der Schwall- oder Trennwand (5", 7) das Aufbringen des Abdichtungsmaterials (23) durch die Öffnung (22) in den von der Sicke (19') gebildeten Hohlraum (21) zwischen Mantel (2) und Randabschnitt (15) erfolgt.

5. Verfahren nach Anspruch 4, **dadurch gekennzeichnet, daß** die Sicke (19') mit zumindest einer Entlüftungsöffnung (25) für das Entweichen der Luft beim Aufbringen des Abdichtungsmaterials (23) versehen wird.

6. Verfahren nach Anspruch 1, **dadurch gekennzeichnet, daß** der Randabschnitt (15) vor dem Einführen in radialer Richtung eingesickt und als Abdichtungsmaterial ein Dichtungsring (26) verwendet wird, der in die Sicke (19") vor dem Einführen der Schwall- oder Trennwand (5"', 7) eingefügt wird.

7. Verfahren nach einem der Ansprüche 1 bis 6, **dadurch gekennzeichnet, daß** der Randabschnitt (15) mit dem Mantel (2) zusätzlich durch Schweißen oder Clinchen verbunden wird.

8. Behälter für Betriebsmittel von Fahrzeugen, der einen zylinderförmigen Mantel (2) und mindestens eine Schwall- oder Trennwand (5, 5', 5", 5"', 7) in seinem Inneren aufweist, welche einen in Axialrichtung umgebogenen Randabschnitt (15) hat, **dadurch gekennzeichnet, daß** zwischen dem Randabschnitt (15) und der Innenseite des Mantels (2) ein Abdichtungsmaterial (16, 23, 26) aufgebracht ist.

9. Behälter (1) nach Anspruch 8, **dadurch gekennzeichnet, daß** das Abdichtungsmaterial eine Kleberaupe (16) ist, welche in den auf der Innenseite des Mantels (2) umlaufenden Mündungsspalt (18) keilförmig eingepreßt ist, der sich zwischen dem Biegebereich des Randabschnittes (15) und der Innenseite des Mantels (2) einstellt.

10. Behälter (1) nach Anspruch 9, **dadurch gekennzeichnet, daß** der Randabschnitt (15) mit einer radial einwärts gerichteten Sicke (19) versehen ist, die eine an der Innenseite des Mantels (2) umlaufende und in axialer Richtung ausmündende Hinterschneidung (20) zwischen dem Randabschnitt (15) und dem Mantel (2) beläßt, in die als Abdichtungsmaterial eine Kleberaupe (16) formschlüssig eingepreßt ist.

11. Behälter (1) nach Anspruch 8, **dadurch gekennzeichnet, daß** der Randabschnitt (15) mit einer radial einwärts gerichteten Sicke (19') versehen ist, welche zumindest eine Öffnung (22) aufweist, über die das Abdichtungsmaterial (23) in den zwischen der Sicke (19') und der Innenseite des Mantels (2) ausgebildeten Hohlraum (21) diesen ausfüllend eingebracht ist.

12. Behälter (1) nach Anspruch 8, **dadurch gekennzeichnet, daß** der Randabschnitt (15) mit einer radial einwärts gerichteten Sicke (19") versehen ist, in welche ein Abdichtungsmaterial in Form eines Dichtungsringes (26) eingefügt ist.
